# EUROPEAN PATENT APPLICATION

(11) **EP 4 807 524 A1**
(43) Date of publication of application: **16.09.2026**
(21) Application number: 26164459.5
(22) Date of filing: 12.03.2026
(51) Int. Cl.: G06F 3/12

(54) **PRINTING CONTROL DEVICE, PRINTING CONTROL METHOD, AND PROGRAM**

(30) Priority: 14.03.2025 JP 2025041246
(71) Applicant: Seiko Instruments Inc., Chiba-shi, Chiba 261-8507 (JP)
(72) Inventor: NOMURA, Shohei, Chiba-shi, 261-8507 (JP); YOSHIDA, Daisuke, Chiba-shi, 261-8507 (JP); KONDO, Hiroaki, Chiba-shi, 261-8507 (JP); KANNO, Ren, Chiba-shi, 261-8507 (JP); UNO, Ryuji, Chiba-shi, 261-8507 (JP)
(74) Representative: Lewis Silkin LLP

(57) **Abstract**

A printing control device (200), includes: a print data generation module (210) configured to generate print data; a printing speed analysis module (212) configured to perform analysis of a printing speed with respect to the print data line by line; a printing speed calculation module (213) configured to calculate the printing speed based on a result of the analysis performed by the printing speed analysis module (212) and on a printing misalignment inhibition condition for inhibiting printing misalignment; and a print data transmission module (214) configured to transmit a speed setting command indicating the printing speed and the print data to a printing device (4).

## Description

### BACKGROUND OF THE INVENTION

### 1. Field of the Invention

The present invention relates to a printing control device, a printing control method, and a program.

### 2. Description of the Related Art

In processing in which a printing device prints pieces of print data transmitted sequentially from a host, a printing speed sometimes exceeds a communication speed when the communication speed is not high enough. In this case, the printing device stops until the next piece of data is transmitted, and resumes printing at timing of reception of the print data. Accordingly, a combination of acceleration and deceleration of the printing speed causes uneven printing and printing misalignment in some cases.

With regards to this problem, there has been known a printing device that loads print data in a storage unit and starts printing after an amount of data large enough to ensure a specified printing speed is loaded. The conventional printing device is reduced in uneven printing because continuous printing is executable with checking of a printing situation.

However, according to the above-mentioned conventional technology, loading of print data in the storage unit is required, and a reduction of uneven printing is accordingly out of reach of a printing device that has no storage unit or has an insufficient storage capacity.

There has been a demand for improvement of quality of printing by reducing uneven printing and printing misalignment in a printing device that has no storage unit or has an insufficient storage capacity.

The present invention has been made in view of the above-mentioned point, and is to provide a printing control device, a printing control method, and a program which enable a printing device that has no storage unit or has an insufficient storage capacity to improve the quality of printing by reducing uneven printing and printing misalignment.

### SUMMARY OF THE INVENTION

According to one embodiment of the present invention, there is provided a printing control device including: a print data generation module configured to generate print data; a printing speed analysis module configured to perform analysis of a printing speed with respect to the print data line by line; a printing speed calculation module configured to calculate the printing speed based on a result of the analysis performed by the printing speed analysis module and on a printing misalignment inhibition condition for inhibiting printing misalignment; and a print data transmission module configured to transmit a speed setting command indicating the printing speed and the print data to a printing device.

In the above-mentioned printing control device according to the one embodiment of the present invention, preferably the print data transmission module is configured to transmit, as the speed setting command, a command for setting a highest printing speed in printing of the print data based on the calculated printing speed.

In the above-mentioned printing control device according to the one embodiment of the present invention, it is preferred that the printing speed calculation module is configured to calculate, based on the result of the analysis and the printing misalignment inhibition condition, the printing speed at a line at which largest deceleration occurs in printing of the print data, and wherein the print data transmission module is configured to transmit, as the speed setting command, a command for setting the calculated printing speed as the highest printing speed in printing of the print data.

The above-mentioned printing control device according to the one embodiment of the present invention, preferably further includes a storage unit configured to store a table indicating a threshold value that is associated with a model of the printing device and that is based on the printing misalignment inhibition condition about a change in acceleration in printing of the print data.

The above-mentioned printing control device according to the one embodiment of the present invention, preferably further includes a storage unit configured to store a criterion for determining whether low-speed communication is used which is associated with a model of the printing device.

In the above-mentioned printing control device according to the one embodiment of the present invention, preferably a target of the analysis by the printing speed analysis module is entirety of the print data.

The above-mentioned printing control device according to the one embodiment of the present invention, preferably further includes an update module configured to update firmware of the printing device with firmware for executing printing based on the speed setting command.

According to one embodiment of the present invention, there is provided a printing control method including: a print data generation step of generating print data; a printing speed analysis step of performing analysis of a printing speed with respect to the print data line by line; a printing speed calculation step of calculating the printing speed based on a result of the analysis performed in the printing speed analysis step and on a printing misalignment inhibition condition for inhibiting printing misalignment; and a print data transmission step of transmitting a speed setting command indicating the printing speed and the print data to a printing device.

According to one embodiment of the present invention, there is provided a program for causing a computer to execute: a print data generation step of generating print data; a printing speed analysis step of performing analysis of a printing speed with respect to the print data line by line; a printing speed calculation step of calculating the printing speed based on a result of the analysis performed in the printing speed analysis step and on a printing misalignment inhibition condition for inhibiting printing misalignment; and a print data transmission step of transmitting a speed setting command indicating the printing speed and the print data to a printing device.

According to the at least one embodiment of the present invention, in the printing device that has no storage unit or has an insufficient storage capacity, the quality of printing can be improved by reducing uneven printing and printing misalignment.

### BRIEF DESCRIPTION OF THE DRAWINGS

FIG. 1 is a diagram for illustrating an example of a configuration of a printing system (1) in at least one embodiment of the present invention.
FIG. 2 is a diagram for illustrating an example of an outline of printing processing in the at least one embodiment of the present invention.
FIG. 3 is a diagram for illustrating an example of print data in the at least one embodiment of the present invention.
FIG. 4 is a diagram for illustrating an example of a function configuration of a printing control device (200) according to the at least one embodiment of the present invention.
FIG. 5 is a flow chart for illustrating an example of a flow of printing processing performed by the printing system (1) in the at least one embodiment of the present invention.
FIG. 6 is a view for illustrating an example of a screen (P1) for checking firmware in the at least one embodiment of the present invention.

### DESCRIPTION OF THE EMBODIMENTS

### (At Least One Embodiment)

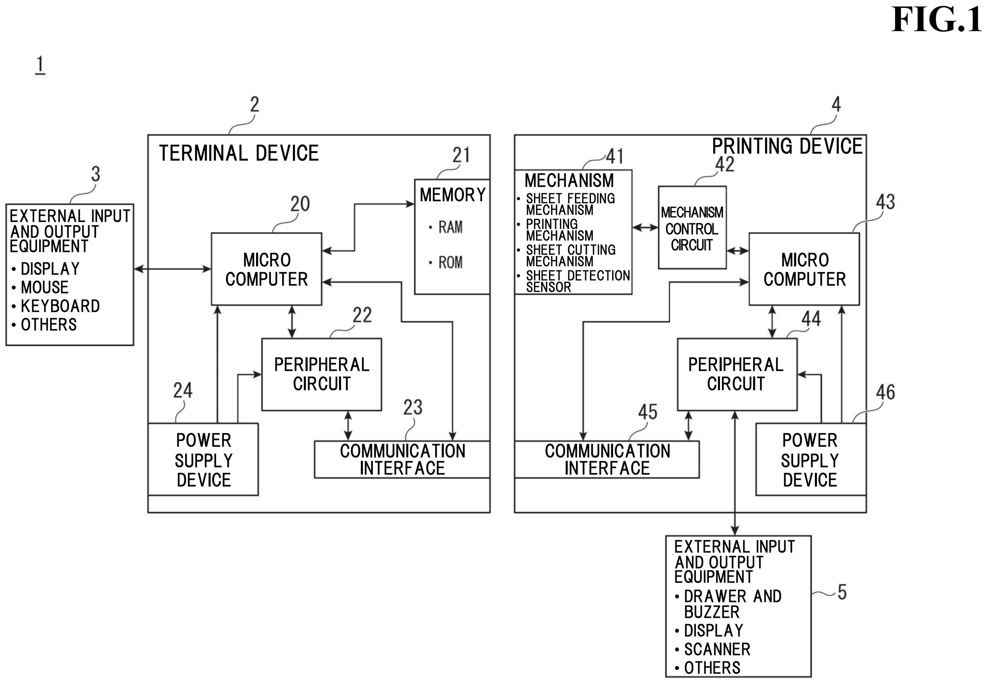

A detailed description is given below by way of example only on at least one embodiment of the present invention with reference to the drawings. FIG. 1 is a diagram for illustrating an example of a configuration of a printing system 1 in the at least one embodiment. The printing system 1 includes a terminal device 2, external input and output equipment 3, a printing device 4, and external input and output equipment 5.

The terminal device 2 transmits generated print data to the printing device 4, and causes the printing device 4 to execute printing. An example of the terminal device 2 is a personal computer (PC). The terminal device 2 may be a smartphone, a tablet terminal, or the like.

The terminal device 2 includes a microcomputer 20, a memory 21, a peripheral circuit 22, a communication interface 23, and a power supply device 24.

The microcomputer 20 performs various types of control with respect to the terminal device 2. The microcomputer 20 is implemented by, for example, a central processing unit (CPU). Programs read out by the microcomputer 20 include software for controlling the printing device 4. The software is also referred to as "printing control software."

The memory 21 stores various types of information such as programs and data read out by the microcomputer 20. The memory 21 is configured from, for example, one or both of a hard disk drive and a semiconductor memory (flash memory), a random access memory (RAM), and a read-only memory (ROM).

The peripheral circuit 22 complements basic functions of the microcomputer 20. The peripheral circuit 22 functions as, for example, an interface between the communication interface 23 and the microcomputer 20, and an interface between the power supply device 24 and the microcomputer 20.

The communication interface 23 holds communication to and from the printing device 4. The communication interface 23 includes, for example, hardware for communicating over a wireless network. The communication interface 23 may include hardware for holding cable communication.

The power supply device 24 supplies electric power to the terminal device 2.

The external input and output equipment 3 includes, for example, a display, a mouse, and a keyboard. The external input and output equipment 3 includes a touch panel in a case in which the terminal device 2 is a smartphone or a tablet terminal.

The printing device 4 prints print data received from the terminal device 2. The printing device 4 includes a mechanism 41, a mechanism control circuit 42, a microcomputer 43, a peripheral circuit 44, a communication interface 45, and a power supply device 46.

The mechanism 41 includes, for example, a sheet feeding mechanism, a printing mechanism, a sheet cutting mechanism, and a sheet detection sensor. For example, the sheet feeding mechanism includes a stepping motor among others, and the printing mechanism includes a thermal head among others.

The mechanism control circuit 42 controls the mechanism 41 based on a control command from the microcomputer 43.

The microcomputer 43 performs various types of control with respect to the printing device 4. The microcomputer 43 is implemented by, for example, a CPU. The microcomputer 43 includes a storage area (a RAM or the like) for temporarily storing print data. A capacity of the storage area is, for example, large enough to store one line of print data, or so. Programs read out by the microcomputer 43 include firmware of the printing device 4.

The firmware includes a printing speed table. The printing speed table is a table about command values for controlling the stepping motor included in the printing mechanism so that printing is executed based on print data. Accordingly, when print data is provided, the printing speed is determined based on the printing speed table.

The peripheral circuit 44 complements basic functions of the microcomputer 43. The peripheral circuit 44 functions as, for example, an interface between the communication interface 45 and the microcomputer 43, and an interface between the power supply device 46 and the microcomputer 43.

The communication interface 45 holds communication to and from the terminal device 2. The communication interface 45 includes, for example, hardware for communicating over a wireless network. The communication interface 45 may include hardware for holding cable communication.

The power supply device 46 supplies electric power to the printing device 4.

The external input and output equipment 5 includes, for example, a drawer and a buzzer, a display, and a scanner.

### [Outline of Printing Processing]

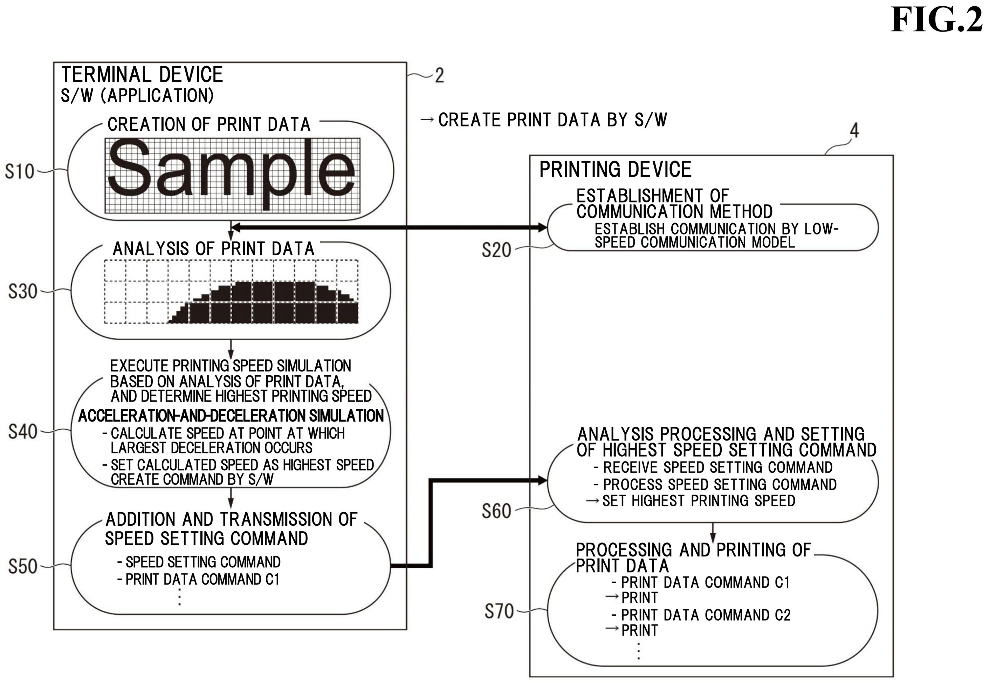

An outline of printing processing performed by the printing system 1 is now described. FIG. 2 is a diagram for illustrating an example of the outline of the printing processing in the at least one embodiment.

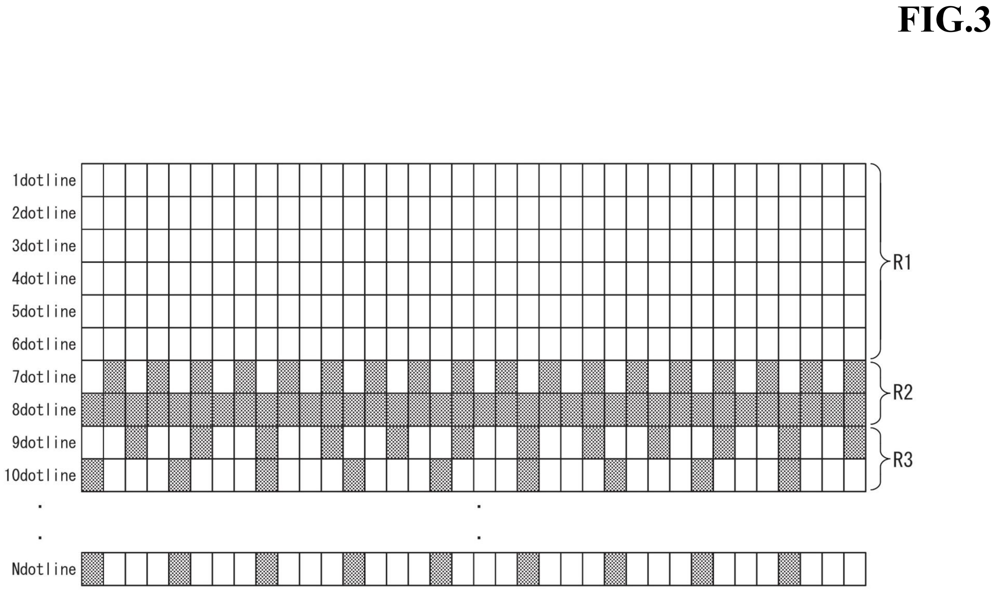

Step S10: The terminal device 2 generates print data. The print data is generated by an application program installed in the terminal device 2. An example of the print data is illustrated in FIG. 3. A piece of print data is generated for each line to be printed (also referred to as "dot line").

Step S20: The terminal device 2 establishes a method of communication to and from the printing device 4. The method of communication between the terminal device 2 and the printing device 4 is based on, for example, a low-speed communication model. An example of the low-speed communication model is serial communication.

Step S30: The terminal device 2 analyzes the print data. The terminal device 2 performs analysis of a pattern of the print data for each dot line. In the analysis, a coverage rate is calculated for each dot line from the pattern of the print data.

Step S40: The terminal device 2 executes printing speed simulation based on a result of the analysis to determine a highest printing speed. The printing speed simulation and the determination of the highest printing speed are executed by the printing control software.

In the example of print data illustrated in FIG. 3, the coverage rate is 0% in a section (Section R1) from Dot Line 1 to Dot Line 6. In Section R1, the printing speed is accelerated. Subsequently, the coverage rate is 50% at Dot Line 7, 100% at Dot Line 8, 33% at Dot Line 9, and 25% at Dot Line 10. Over a section (Section R2) from Dot Line 7 to Dot Line 8 in which the coverage rate increases, the printing speed is decelerated. In a section (Section R3) from Dot Line 9 to a dot line (not shown) at which the coverage rate reaches 50% next time, the coverage rate drops and the printing speed is accelerated. Accordingly, a combination of acceleration and deceleration occurs in a case of printing the print data illustrated in FIG. 3.

The terminal device 2 transmits print data one dot line at a time to the printing device 4. The printing device 4 prints one dot line of print data at a time, before receiving next piece of print data. Accordingly, in a case in which one dot line of print data has not been transmitted from the terminal device 2 to the printing device 4 by the time when the printing device 4 is to print the one dot line of print data, the storage area (a buffer) of the printing device 4 empties out and the printing device 4 stops printing.

At a dot line at which the coverage rate increases, one line of print data is divided into pieces and the pieces are transmitted from the terminal device 2 to the printing device 4. Accordingly, in the case of a dot line at which the coverage rate increases, transmission of one line of print data takes time and, in low-speed communication, the printing speed ends up exceeding the communication speed. In this case, the printing device 4 ceases printing until one line of print data is received, with the result that deceleration of the printing speed occurs.

The printing control software identifies a dot line at which the printing speed is decelerated most, and calculates the printing speed at the identified dot line. The printing control software sets the calculated printing speed as a highest speed of the printing speed (a highest printing speed) with respect to the entirety of the print data. In the example of print data illustrated in FIG. 3, the dot line at which the printing speed is decelerated most is Dot Line 8 at which the coverage rate is 100%. In light of this, the printing control software calculates, through simulation, a printing speed in a case of printing Dot Line 8 at which the coverage rate is 100% at a printing speed that is based on the printing speed table. The printing control software sets the thus calculated printing speed as the highest printing speed.

The printing control software generates a command (speed setting command) for setting the printing speed at the dot line at which the printing speed is decelerated most as the highest printing speed with respect to the entirety of the print data.

Step S50: The terminal device 2 adds the speed setting command at a head of a print data command, and transmits the commands to the printing device 4. The printing control software adds the speed setting command at a head among pieces of data to be transmitted from the terminal device 2 to the printing device 4 in printing of print data so that the speed setting command and the print data command are transmitted in the stated order in the data to be transmitted to the printing device 4. Accordingly, in the illustrated example, the speed setting command, a print data command C1, and a print data command C2 are transmitted in the stated order from the terminal device 2 to the printing device 4. A print data command is a command indicating that printing is to be executed based on print data.

Step S60: The printing device 4 executes processing of analyzing the speed setting command and setting of the highest printing speed indicated by the speed setting command. The printing device 4 receives the speed setting command before the print data command. Accordingly, the printing device 4 sets the highest printing speed based on the speed setting command before executing printing based on the print data command. The setting of the highest printing speed causes generation of a printing speed table in which the highest printing speed is set and which is separate from the printing speed table included in the firmware of the printing device 4.

Step S70: The printing device 4 processes and prints the print data. The printing device 4 uses the generated printing speed table to process the received speed setting command, and executes printing of the print data in a manner that avoids exceeding of the highest printing speed indicated by the speed setting command.

In the illustrated example, the printing device 4 executes printing based on a piece of print data that is indicated by the print data command C1, and executes printing based on a piece of print data that is indicated by the print data command C2. In the printing, the printing device 4 performs control with use of the printing speed table so that exceeding of the set highest printing speed is avoided.

This concludes the description on the outline of the printing processing performed by the printing system 1.

### [Function Configuration of Printing Control Device]

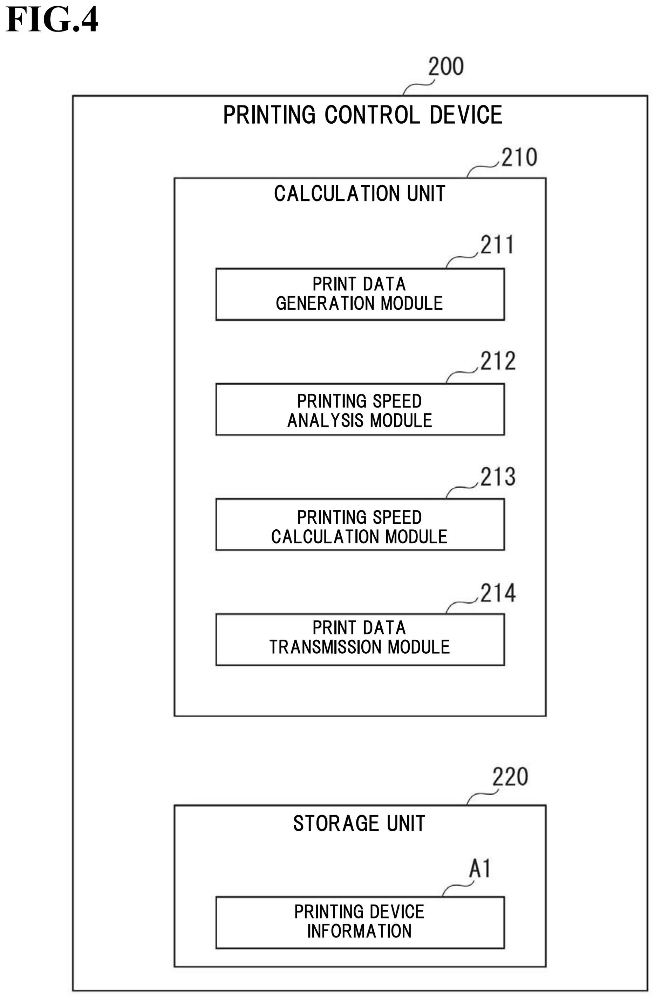

FIG. 4 is a diagram for illustrating an example of a function configuration of a printing control device 200 according to the at least one embodiment. The printing control device 200 includes a calculation unit 210 and a storage unit 220. The calculation unit 210 is implemented by the microcomputer 20 included in the terminal device 2. The storage unit 220 is implemented by the memory 21 included in the terminal device 2.

The calculation unit 210 includes a print data generation module 211, a printing speed analysis module 212, a printing speed calculation module 213, and a print data transmission module 214. Those function modules are each implemented by, for example, loading a program read out of a ROM onto a RAM and executing processing in accordance with the program by the CPU. The ROM and the RAM are included in the storage unit 220. The program is, for example, the printing control software described above.

The print data generation module 211 generates print data.

The printing speed analysis module 212 performs analysis of the printing speed with respect to print data line by line.

The printing speed calculation module 213 calculates the printing speed based on a result of the analysis performed by the printing speed analysis module 212 and a printing misalignment inhibition condition for inhibiting printing misalignment. The printing misalignment inhibition condition is, for example, to print at a printing speed equal to or lower than a printing speed at a line at which the largest deceleration occurs in printing of print data.

The print data transmission module 214 transmits the speed setting command indicating the printing speed and print data to the printing device 4.

The storage unit 220 stores various types of information. The storage unit 220 stores printing device information A1. The printing device information A1 is a combination of information indicating a model of the printing device 4 and information indicating firmware installed in the printing device 4. The information indicating the firmware includes the printing speed table used by the printing device 4 to print. As described later, the terminal device 2 may acquire the printing device information A1 from the printing device 4 and, in that case, the printing device information A1 is not required to be stored in the storage unit 220 in advance.

### [Flow of Printing Processing]

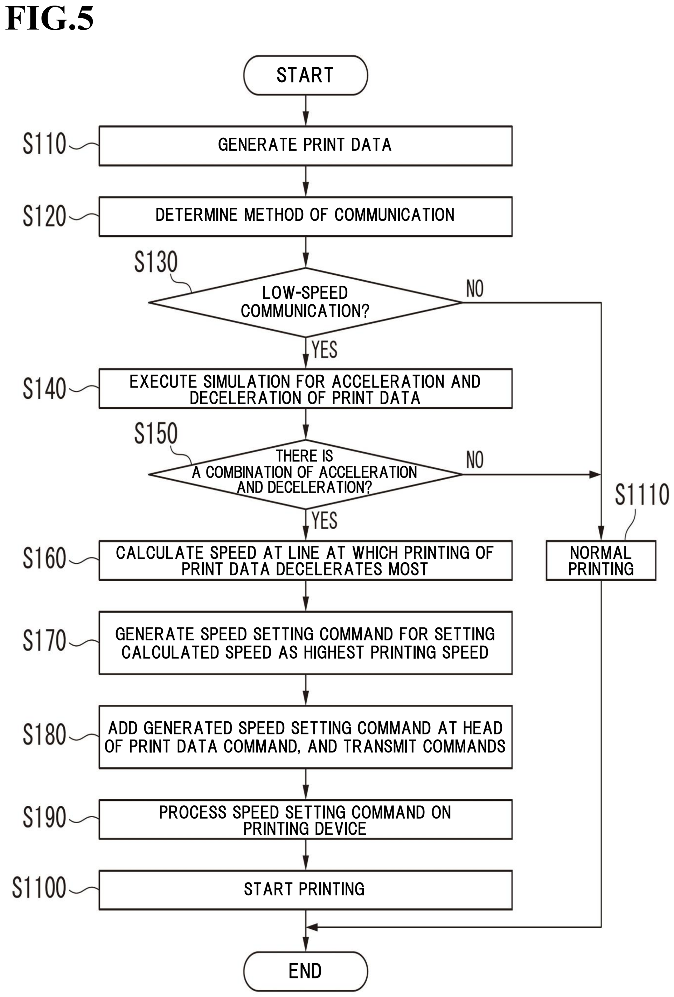

FIG. 5 is a flow chart for illustrating an example of a flow of the printing processing performed by the printing system 1 in the at least one embodiment.

Step S110: The print data generation module 211 generates print data.

Step S120: The printing speed analysis module 212 determines the method of communication. The printing speed analysis module 212 acquires, from the print data transmission module 214, information indicating the method of communication established between the terminal device 2 and the printing device 4, to thereby determine the method of communication.

Step S130: The printing speed analysis module 212 determines whether the method of communication is low-speed communication. Examples of the low-speed communication include serial communication. Examples of communication other than low-speed communication include universal serial bus (USB) communication, Bluetooth (trademark) communication, Wireless Fidelity (Wi-Fi) communication, and Ethernet communication.

When the printing speed analysis module 212 determines that the method of communication is low-speed communication (Step S130: YES), the printing control device 200 executes a processing step of Step S140. In contrast, when the printing speed analysis module 212 determines that the method of communication is not low-speed communication (Step S130: NO), the printing control device 200 executes a processing step of Step S1110.

Step S140: The printing speed analysis module 212 executes simulation for acceleration and deceleration of print data. The printing speed analysis module 212 analyzes, based on the acceleration-and-deceleration simulation, the printing speed with respect to the print data line by line. A target of analysis performed by the printing speed analysis module 212 in this step is the entirety of print data transmitted to the printing device 4 by the terminal device 2.

The printing speed analysis module 212 uses the printing speed table about the printing device 4 in the acceleration-and-deceleration simulation. As described above, the printing speed table is included in the printing device information A1 to be stored in the storage unit 220 in advance. In other words, the printing speed table is shared between the terminal device 2 and the printing device 4.

As another example, the printing speed analysis module 212 may acquire the printing speed table from the printing device 4. In that case, the printing speed table is not required to be stored in the storage unit 220. As still another example, a plurality of printing speed tables associated with models of the printing device may be stored in the storage unit 220 in advance. In that case, the printing speed analysis module 212 acquires model information indicating the model of the printing device 4 from the printing device 4, and selects, based on the model information, a printing speed table to use for the acceleration-and-deceleration simulation out of the plurality of printing speed tables.

Step S150: The printing speed analysis module 212 determines whether there is a combination of acceleration and deceleration in printing of the print data. The printing speed analysis module 212 determines whether there is a combination of acceleration and deceleration based on a result of the analysis obtained through the acceleration-and-deceleration simulation. When the printing speed analysis module 212 determines that there is a combination of acceleration and deceleration (Step S150: YES), the printing speed calculation module 213 executes a processing step of Step S160. In contrast, when the printing speed analysis module 212 determines that there is no combination of acceleration and deceleration (Step S150: NO), the printing control device 200 executes the processing step of Step S1110.

Step S160: The printing speed calculation module 213 calculates the speed at a line at which printing of the print data decelerates most. The printing speed calculation module 213 calculates, based on the result of the analysis performed by the printing speed analysis module 212 and the printing misalignment inhibition condition, a printing speed at a line at which the largest deceleration occurs in printing of the print data. As described above, in the example of the at least one embodiment, the printing misalignment inhibition condition is to print at a printing speed equal to or lower than a printing speed at a line at which the largest deceleration occurs in printing of print data.

Step S170: The print data transmission module 214 generates a speed setting command for setting the speed calculated by the printing speed calculation module 213 as the highest printing speed.

Step S180: The print data transmission module 214 adds the generated speed setting command at a head of the print data command, and transmits the commands to the printing device 4. Accordingly, the print data transmission module 214 transmits, as the speed setting command, a command for setting the printing speed calculated by the printing speed calculation module 213 as the highest printing speed in printing of the print data.

The print data transmission module 214 transmits the speed setting command and the print data command to the printing device 4. In transmitting the commands, the print data transmission module 214 transmits the speed setting command to the printing device 4 at a time that precedes transmission of the print data command. The printing device 4 receives the speed setting command and the print data command from the terminal device 2. In receiving the commands, the printing device 4 receives the speed setting command at a time that precedes reception of the print data command.

As described above, the highest printing speed is calculated with the entirety of print data as a target. Accordingly, it is sufficient to transmit the speed setting command only once in printing of print data, before transmission of the print data.

Step S190: The printing device 4 processes the speed setting command. The printing device 4 uses the speed setting table stored in advance to process the received speed setting command. The printing device 4 generates a printing speed table in which the highest printing speed is set as a result of processing the speed setting command.

According to the speed setting command, the printing speed at the line at which the largest deceleration occurs in printing of the print data is set as the highest printing speed. According to the printing speed simulation described above, in a case of not applying the speed setting command, a printing speed at a line that precedes the line at which the largest deceleration occurs by a few lines is higher than the printing speed at the line at which the largest deceleration occurs. In a case of applying the speed setting command, the printing speed is prevented from exceeding the highest printing speed indicated by the speed setting command, and deceleration of the printing speed is accordingly mitigated.

Step S1100: The printing device 4 starts printing. The printing device 4 executes printing based on the print data that is indicated by the print data command. The printing device 4 adjusts the printing speed of the print data so as to avoid exceeding the highest printing speed, based on the generated printing speed table.

Step S1110: The printing device 4 starts normal printing. The printing device 4 executes printing based on the print data that is indicated by the print data command. The printing device 4 executes printing at a normal printing speed based on the printing speed table included in advance in the firmware.

The printing system 1 thus ends the printing processing.

The description given in the at least one embodiment is about an example of a case of calculating a printing speed at a line at which the largest deceleration occurs in printing of print data and setting the calculated printing speed as the highest printing speed based on the printing misalignment inhibition condition. However, the printing misalignment inhibition condition is not limited thereto. A printing speed at one of lines at which deceleration occurs in printing of print data may be calculated to be set as the highest printing speed. For example, a printing speed at a line at which the second largest deceleration occurs in printing of print data may be calculated to be set as the highest printing speed. In those cases, as in the at least one embodiment, the print data transmission module 214 transmits, as the speed setting command, a command for setting the highest printing speed in printing of print data based on the printing speed calculated by the printing speed calculation module 213.

Mitigation of deceleration with minimum slowing of the printing speed can be achieved by setting a printing speed at a line at which the largest deceleration occurs as the highest printing speed as in the at least one embodiment. For the purpose of mitigating deceleration, as another example of the printing misalignment inhibition condition, a printing speed at a line at which the largest acceleration occurs in printing of print data, or a printing speed at one of lines at which acceleration occurs, may be calculated to be set as the highest printing speed. In that case as well, the printing speed is prevented from exceeding the highest printing speed indicated by the speed setting command, and acceleration of the printing speed is accordingly mitigated. However, in order to minimize slowing of the printing speed, setting a printing speed at a line at which the largest deceleration occurs as the highest printing speed is preferred.

As still another example of the printing misalignment inhibition condition, the printing speed calculation module 213 may perform a comparison between the capacity of the storage area of the printing device 4 and the data amount of the print data to calculate, based on a result of the comparison, a printing speed at which emptying out of the storage area of the printing device 4 is avoided. In that case, the printing speed calculation module 213 acquires, for example, capacity information indicating the capacity of the storage area of the printing device 4 from the printing device 4. The capacity information may be included in the printing device information A1 to be stored in the storage unit 220 in advance. In that case, the printing speed calculation module 213 acquires the capacity information stored in the storage unit 220.

With regards to the processing step of Step S130 in which whether the method of communication is low-speed communication is determined, a communication speed tolerance within which printing misalignment is prevented may vary depending on the model of the printing device 4. Accordingly, the printing misalignment inhibition condition may be expressed by a criterion for determining whether low-speed communication is used which is associated with the model of the printing device 4.

In that case, the storage unit 220 of the terminal device 2 stores a low-speed communication criterion table. The low-speed communication criterion table is a table indicating a criterion for determining whether low-speed communication is used which is associated with the model of the printing device 4. The criterion for determining whether low-speed communication is used is expressed by, for example, a threshold value for the communication speed. The method of communication determines the communication speed. Accordingly, as another example, the criterion for determining whether low-speed communication is used may be expressed by the method of communication. In Step S130, the printing speed analysis module 212 acquires the model information indicating the model of the printing device 4 from the printing device 4. The printing speed analysis module 212 then determines whether low-speed communication is used based on the model of the printing device 4 and the criterion for determining whether low-speed communication is used that is indicated by the low-speed communication criterion table.

With regards to the processing step of Step S150 in which whether there is a combination of acceleration and deceleration is determined, tolerance for the magnitude of a change in acceleration within which printing misalignment is prevented may vary depending on the model of the printing device 4. The magnitude of a change in acceleration may vary because the capacity of the storage area in which print data is temporarily stored may vary depending on the model of the printing device 4. Accordingly, the printing misalignment inhibition condition may be expressed by a threshold value for a change in acceleration which is associated with the model of the printing device 4.

In that case, the storage unit 220 of the terminal device 2 stores an acceleration change threshold value table. The acceleration change threshold value table is a table indicating a threshold value that is associated with the model of the printing device 4 and that is based on a printing misalignment inhibition condition about a change in acceleration in printing of print data. In Step S150, the printing speed analysis module 212 acquires the model information indicating the model of the printing device 4 from the printing device 4. The printing speed analysis module 212 then determines, based on the printing speed simulation and the model of the printing device 4, whether a change in acceleration of printing is equal to or less than the threshold value indicated by the acceleration change threshold value table.

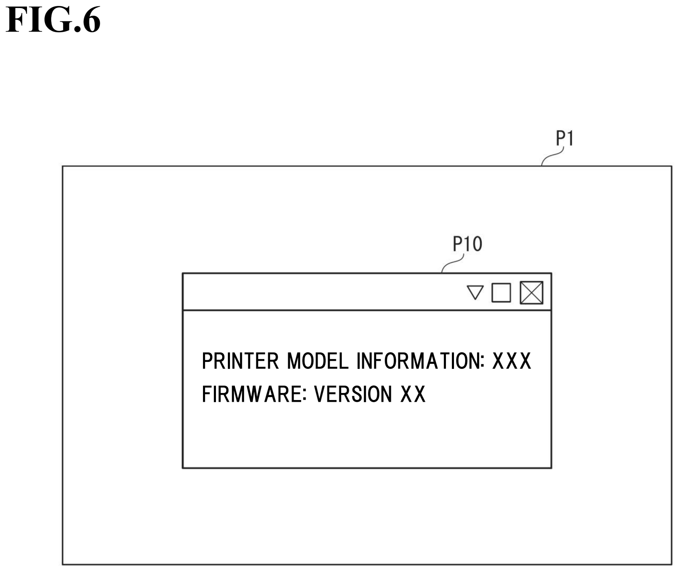

In order for the printing device 4 to control the printing speed based on the speed setting command, firmware capable of analyzing the speed setting command is required to be installed in the printing device 4. A screen P1 on which a user checks firmware installed in the printing device 4 is now described. FIG. 6 is a view for illustrating an example of the screen P1 in the at least one embodiment. The screen P1 is displayed on the display included in the terminal device 2.

The screen P1 includes a printing device information display area P10. The printing device information display area P10 is a field in which the printing device information A1 is displayed. In the illustrated example, information indicating the model of the printing device 4 and information indicating firmware installed in the printing device 4 out of the printing device information A1 are displayed in the printing device information display area P10.

In a case in which the firmware capable of analyzing the speed setting command is not installed in the printing device 4, the terminal device 2 may update firmware of the printing device 4. In that case, the terminal device 2 may include an update module. The update module updates the firmware of the printing device 4 with firmware for executing printing based on the speed setting command. The firmware for executing printing based on the speed setting command is provided by, for example, a manufacturer of the printing device 4 on the manufacturer's website.

The update module first acquires information of firmware from the printing device 4. In a case in which the firmware identified by the acquired information is not the firmware capable of analyzing the speed setting command, the update module acquires the firmware capable of analyzing the speed setting command from the website. The update module provides the acquired firmware to the printing device 4, and updates the firmware of the printing device 4 with the acquired firmware.

As described above, the printing control device 200 according to the at least one embodiment includes the print data generation module 211, the printing speed analysis module 212, the printing speed calculation module 213, and the print data transmission module 214.

The print data generation module 211 generates print data.

The printing speed analysis module 212 performs analysis of the printing speed with respect to the print data line by line.

The printing speed calculation module 213 calculates a printing speed based on a result of the analysis performed by the printing speed analysis module 212 and on a printing misalignment inhibition condition for inhibiting printing misalignment.

The print data transmission module 214 transmits a speed setting command indicating the printing speed and the print data to the printing device 4.

This configuration enables the printing control device 200 according to the at least one embodiment to transmit, to the printing device 4, along with the print data, the speed setting command indicating the printing speed that is calculated based on the result of the analysis and on the printing misalignment inhibition condition. The printing control device 200 is accordingly capable of improving the quality of printing by reducing uneven printing and printing misalignment in a printing device that has no storage unit or has an insufficient storage capacity.

In the printing system 1, only a command for analyzing the speed setting command and the printing speed table generated by analyzing the speed setting command are added to firmware installed in the printing device 4. Accordingly, an increase in usage of storage area capacity of the printing device 4 that is caused by execution of processing related to the printing system 1 is less than in a case of adding an external memory or the like. Further, analysis of the speed setting command requires no upgrade of performance of the microcomputer 43 on the printing device 4. The printing system 1 thus requires no extra cost to inhibit a combination of (or either of) acceleration and deceleration of the printing speed from lowering the quality of printing.

In the above, the at least one embodiment of the present invention has been described in detail with reference to the accompanying drawings. However, specific configurations of the present invention are not limited to those of the at least one embodiment and encompass design modifications and the like without departing from the scope of the present invention as defined by the appended claims.

For example, a computer program for implementing the functions of each of the above-mentioned devices may be recorded on a computer-readable recording medium, and the program recorded on the recording medium may be read into a computer system and executed. The term "computer system" as used herein may encompass OSs as well as peripheral equipment and other types of hardware.

The term "computer-readable recording medium" refers to a writable non-volatile memory such as a flexible disk, a magneto-optical disc, a ROM, and a flash memory, a portable medium such as a digital versatile disc (DVD), or a storage device such as a hard disk drive built in a computer system.

The term "computer-readable recording medium" also encompasses what holds a program for a given period of time, such as a volatile memory (such as a dynamic random access memory (DRAM)) inside a computer system that serves as a server or a client when a program is transmitted over the Internet or a similar network or via a telephone line or a similar communication line.

The program described above may be transmitted from a computer system in which the program is stored in a storage device or the like to another computer system via a transmission medium or on transmission waves in a transmission medium. The term "transmission medium" through which the program is transmitted as used herein refers to a medium having a function of transmitting information, such as the Internet or a similar network (a communication network), or a telephone line or a similar communication line (a communication wire).

The program described above may also be a program for implementing some of the functions described above. The program described above may also be what is called a differential file (a differential program), with which the functions described above can be implemented by being used in combination with a program already recorded in the computer system.

## Claims

1. A printing control device (200), comprising:
a print data generation module (210) configured to generate print data;
a printing speed analysis module (212) configured to perform analysis of a printing speed with respect to the print data line by line;
a printing speed calculation module (213) configured to calculate the printing speed based on a result of the analysis performed by the printing speed analysis module (212) and on a printing misalignment inhibition condition for inhibiting printing misalignment; and
a print data transmission module (214) configured to transmit a speed setting command indicating the printing speed and the print data to a printing device (4).

2. The printing control device (200) according to claim 1, wherein the print data transmission module (214) is configured to transmit, as the speed setting command, a command for setting a highest printing speed in printing of the print data based on the calculated printing speed.

3. The printing control device (200) according to claim 2,
wherein the printing speed calculation module (213) is configured to calculate, based on the result of the analysis and the printing misalignment inhibition condition, the printing speed at a line at which largest deceleration occurs in printing of the print data, and
wherein the print data transmission module (214) is configured to transmit, as the speed setting command, a command for setting the calculated printing speed as the highest printing speed in printing of the print data.

4. The printing control device (200) according to any one of the preceding claims, further comprising a storage unit (220) configured to store a table indicating a threshold value that is associated with a model of the printing device (4) and that is based on the printing misalignment inhibition condition about a change in acceleration in printing of the print data.

5. The printing control device (200) according to any one of the preceding claims, further comprising a storage unit (220) configured to store a criterion for determining whether low-speed communication is used which is associated with a model of the printing device (4).

6. The printing control device (200) according to any one of the preceding claims, wherein a target of the analysis by the printing speed analysis module (212) is entirety of the print data.

7. The printing control device (200) according to any one of the preceding claims, further comprising an update module configured to update firmware of the printing device (4) with firmware for executing printing based on the speed setting command.

8. A printing control method, comprising:
a print data generation step (S110) of generating print data;
a printing speed analysis step (S140) of performing analysis of a printing speed with respect to the print data line by line;
a printing speed calculation step (S160) of calculating the printing speed based on a result of the analysis performed in the printing speed analysis step and on a printing misalignment inhibition condition for inhibiting printing misalignment; and
a print data transmission step (S180) of transmitting a speed setting command indicating the printing speed and the print data to a printing device (4).

9. A program for causing a computer to execute:
a print data generation step (S110) of generating print data;
a printing speed analysis step (S140) of performing analysis of a printing speed with respect to the print data line by line;
a printing speed calculation step (S160) of calculating the printing speed based on a result of the analysis performed in the printing speed analysis step and on a printing misalignment inhibition condition for inhibiting printing misalignment; and
a print data transmission step (S180) of transmitting a speed setting command indicating the printing speed and the print data to a printing device (4).
